# EUROPEAN PATENT APPLICATION

(11) **EP 4 461 604 A1**
(43) Date of publication of application: **13.11.2024**
(21) Application number: 24168331.7
(22) Date of filing: 03.04.2024
(51) Int. Cl.: B60R 19/24

(54) **BUMPER ASSEMBLY AND VEHICLE**

(30) Priority: 12.05.2023 CN 202310539318
(71) Applicant: Stellantis Auto SAS, 78300 Poissy (FR)
(72) Inventor: WANG, ZI YE, SHANGHAI, 200030 (CN); YAN, ZHENGHONG LARKY, Shanghai, 200230 (CN); SONG, WENBIN MARK, Shanghai, 200230 (CN); LI, DAN DENNIS, Shanghai,, 200230 (CN); LI, BING, Shanghai,, 200030 (CN)

(57) **Abstract**

The present disclosure relates to a bumper assembly (100) and a vehicle, the bumper assembly (100) comprising: a bumper (1); and a reinforcing frame (2) mounted to the bumper (1) through a connecting member (23); wherein the reinforcing frame (2) comprises a reinforcing member (22) oriented towards the bumper (1), and at least part of the reinforcing member (22) provides a supporting force to the bumper (1) to limit a deformation of the bumper (1). According to the bumper assembly of the present disclosure, a reinforcing frame is arranged on a bumper to reduce the vibration amplitude of the bumper by a reinforcing member arranged on the reinforcing frame when the bumper is subjected to an external force, and the reinforcing frame has a simple structure, convenient installation and lower cost, and can be widely used in various types of vehicles.

## Description

### RELATED FIELD

The present invention claims the priority of the Chinese application 202310539318.6 filed on May, the 12th of 2023 (12.05.2023), the content of which (text, drawings and claims) is incorporated herein by reference.

The present disclosure generally relates to the technical field of vehicle, and more particularly, to a bumper assembly. The present disclosure further relates to a vehicle comprising the bumper assembly.

### BACKGROUND

A vehicle bumper is a safety device that absorbs and relieves external impacts and protects the front and rear portions of a vehicle body.

Due to the rigid connection between the bumper and the vehicle body, and the gap between the bumper and the vehicle body, the bumper vibration will generate noise and cause damage to the vehicle body during vehicle driving, thus affecting the driving and riding experience for a user and reducing the safety of the vehicle.

### SUMMARY

The present disclosure aims at overcoming at least one of the defects in the prior art by providing a bumper assembly for a vehicle. In other words, the bumper assembly according to the present disclosure can reduce the vibration and noise of the bumper and improve the user experience of the vehicle.

To this end, the first aspect of the present disclosure provides a bumper assembly, comprising: a bumper; and a reinforcing frame mounted to the bumper through a connecting member; wherein the reinforcing frame comprises a reinforcing member oriented towards the bumper, and at least part of the reinforcing member provides a supporting force to the bumper to limit a deformation of the bumper.

According to an alternative embodiment of the present disclosure, the reinforcing frame is arranged adjacent to at least one end of the bumper in a length direction of the bumper.

According to an alternative embodiment of the present disclosure, the reinforcing frame comprises: a body and the reinforcing member extending from the body, wherein the reinforcing member comprises: a first reinforcement abutting against the bumper to provide a first supporting force; and a second reinforcement, wherein a gap is arranged between the second reinforcement and the bumper; wherein the reinforcing member is configured such that, when the first supporting force provided by the first reinforcement to the bumper is insufficient, the bumper abutting against the second reinforcement, and the second reinforcement additionally provides a second supporting force to the bumper.

According to an alternative embodiment of the present disclosure, the body is shaped to follow the shape of the bumper and comprises: a first body portion, and a second body portion bent and extending from an edge of the first body portion; wherein the reinforcing member is arranged on the second body portion.

According to an alternative embodiment of the present disclosure, the first reinforcement is configured to have a strip shape extending along the length direction of the bumper.

According to an alternative embodiment of the present disclosure, the first reinforcement comprises: an extension section extending from the body; and a compression section extending obliquely from the extension portion towards the bumper.

According to an alternative embodiment of the present disclosure, the second reinforcement is configured as a reinforcing rib protruding from a surface of the body.

According to an alternative embodiment of the present disclosure, the reinforcing frame further comprises at least one opening, and the first reinforcement extends from at least part of a peripheral edge of the at least one opening toward the inside of the opening.

According to an alternative embodiment of the present disclosure, the connecting member comprises: a clip and a slot mated with the clip; wherein the clip is arranged on one of the reinforcing frame and the bumper, and the slot is arranged on the other of the reinforcing frame and the bumper.

According to an alternative embodiment of the present disclosure, the connecting member comprises: a mounting hole arranged on the first body portion of the reinforcing frame; and a fastener passing through the mounting hole to mount the reinforcing frame to the bumper.

The second aspect of the present disclosure relates to a vehicle comprising the bumper assembly according to the first aspect of the present disclosure.

Compared with the prior art, the bumper assembly according to the present disclosure has various advantages, in particular: a reinforcing frame is arranged on a bumper to reduce the vibration amplitude of the bumper by a reinforcing member arranged on the reinforcing frame when the bumper is subjected to an external force. Moreover, the reinforcing frame has a simple structure, convenient installation and lower cost, and can be widely used in various types of vehicles.

### BRIEF DESCRIPTION OF THE DRAWINGS

Other features and advantages of the present disclosure will be readily understood by the following preferred embodiments described in detail in conjunction with the accompanying drawings, in which a same reference numeral indicates a same or similar component.
FIG. 1 is a schematic view of a vehicle, illustrating a bumper assembly.
FIG. 2 is a perspective view of a bumper assembly according to an embodiment of the present disclosure, with an enlarged portion thereof being a perspective view of a snapping portion between a reinforcing frame and a bumper.
FIG. 3 is a perspective view of a rear side of an assembly region between a bumper and a reinforcing frame according to an embodiment of the present disclosure.
FIG. 4 is a perspective view of a rear side of the reinforcing frame shown in FIG. 3.
FIG. 5 is a perspective view of a front side of the reinforcing frame shown in FIG. 3.
FIG. 6 is a cross-sectional view taken along A-A shown in FIG. 3.
FIG. 7 is a schematic view of the reinforcing frame and the bumper in the embodiment shown in FIG. 3 in different relative positions.
FIG. 8 is a cross-sectional view taken along B-B shown in FIG. 3.

### DETAILED DESCRIPTION

The implementation and usage of the embodiments are discussed in detail below. However, it is understood that the specific embodiments discussed herein are merely intended to illustrate specific ways of implementing and using the present disclosure, and are not intended to limit the protection scope of the present disclosure.

In the specification, when describing structures and positions of components, the directional expressions such as "up", "down", "left", "right", "front", "rear", "top", "bottom" are not absolute, but are relative. These directional expressions are appropriate when the components are arranged as shown in the accompanying drawings, but should be changed accordingly when the positions of the components in the drawings change.

In the specification, "front" and "rear" are defined with reference to front and rear directions of a vehicle. Besides, an X-direction indicates a longitudinal direction of the vehicle (i.e., a vehicle driving direction), a Y-direction indicates a transverse direction of the vehicle (i.e., a direction at an angle of 90 degrees relative to the vehicle driving direction), i.e., a length direction of a bumper, and a Z-direction indicates a vertical direction of the vehicle (i.e., an up-down direction).

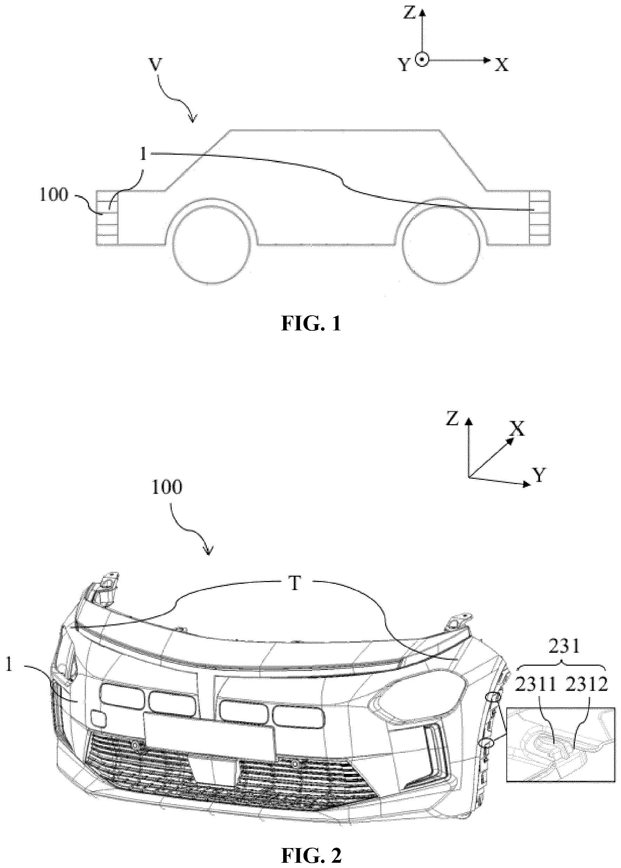

As shown in FIGs. 1 to 3, a vehicle V of the present disclosure comprises a bumper assembly 100, the bumper assembly 100 comprising a bumper 1 and a reinforcing frame 2. In the specification, a front bumper located at the front of the vehicle is described as an example. However, it should be understood that the bumper 1 may also be a rear bumper of the vehicle V The reinforcing frame 2 is mounted to the bumper through a connecting member 23. More specifically, the reinforcing frame 2 is arranged adjacent to at least one end T of the bumper 1 in the length direction Y of the bumper 1. Since the vibrations at both ends of the bumper 1 are stronger than those in the middle portion, it is more effective to arrange the reinforcing frame 2 at the end portion T of the bumper 1 than to arrange the reinforcing frame 2 over the entire bumper 1. For example, as shown in FIG. 2, the reinforcing frame 2 is mounted to the rear of the right end of the front bumper 1, or to the side facing the interior of the vehicle. It is understood that the reinforcing frame 2 may also be mounted to the left end of the bumper 1 or other desired positions, which is not limitative in the present disclosure.

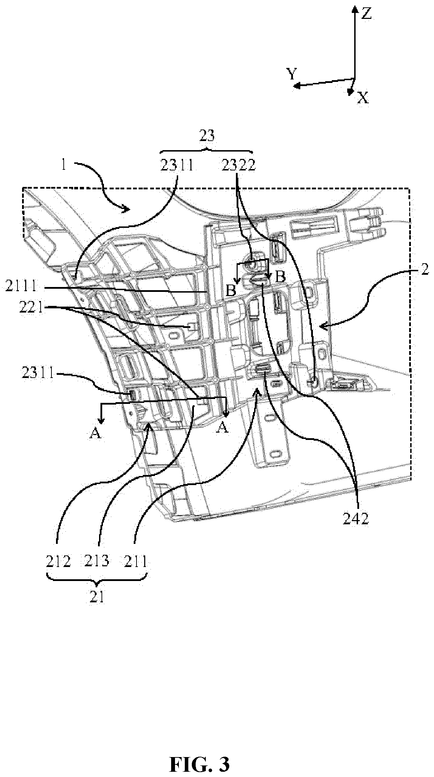

As shown in FIGs. 3 to 5, the reinforcing frame 2 comprises a body 21 and a reinforcing member 22, wherein the shape of the body 21 follows the shape of the bumper 1. The reinforcing member 22 extends from the body 21 and is oriented towards the bumper 1. At least part of the reinforcing member 22 provides a supporting force to the bumper 1 to limit a deformation of the bumper 1.

The body 21 comprises a first body portion 211 and a second body portion 212 bent and extending from an edge 2111 of the first body portion 211. For example, according to the illustrated embodiment, the first body portion 211 is arranged toward the front of the vehicle, and the second body portion 212 is arranged toward the lateral side of the vehicle. The second body portion 212 is bent and extends from the edge 2111 of the first body portion 211 toward the rear of the vehicle to form an included angle with the first body portion 211, and the angle is mated with the bending angle of the end portion of the bumper 1.

The reinforcing frame 2 comprises at least one opening 213. For example, the second body portion 212 of the reinforcing frame 2 is provided with five groups of substantially rectangular openings 213 arranged in the transverse direction (three openings 213 for each group), and these openings 213 are arranged to substantially cover the entire second body portion 212. By providing these openings 213, on one hand, it is possible to reduce the overall weight of the reinforcing frame 2 and enhance the operational capability of the vehicle V and on the other hand, other components on the vehicle V can be arranged, and manufacturing costs can be reduced. According to a variant, each opening 213 may also be shaped as a trapezoid, a circle, an oval, etc. It is understood that the shape, number and position of the openings 213 may be arranged according to actual needs, which are not limitative in the present disclosure.

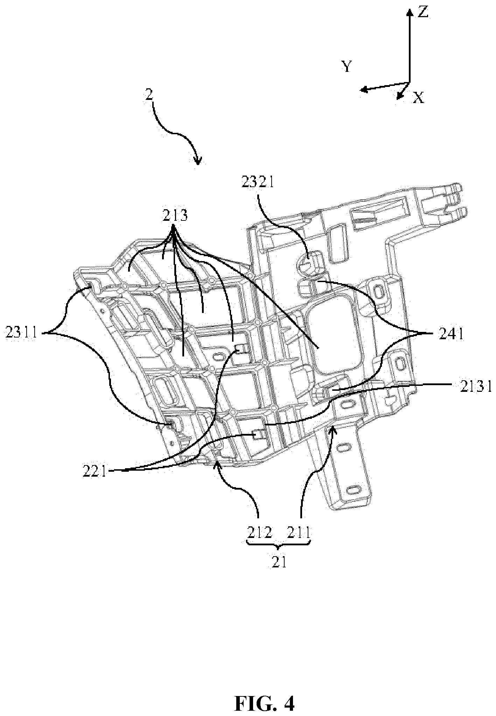

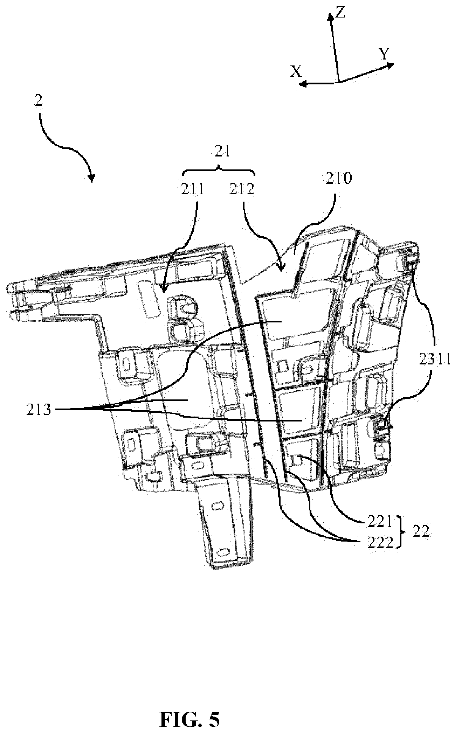

As shown in FIGs. 4 and 5, the reinforcing member 22 is arranged on the second body portion 212. Since other supporting components are arranged in the middle of the bumper, the reinforcing member 22 is arranged on the second body portion 212 located on the side of the end portion of the bumper, which can improve the overall supporting effect for the bumper. The reinforcing member 22 comprises a first reinforcement 221 and a second reinforcement 222. The first reinforcement 221 extends from the body 21 and is oriented towards the bumper 1. According to the illustrated embodiment, the first reinforcement 221 extends from at least part of the peripheral edge 2131 of the at least one opening 213 toward the inside of the opening 213. With this arrangement, a sufficient avoidance space can be arranged for the deformation of the first reinforcement 221, so that the first reinforcement 221 can provide a greater supporting force to the bumper 1. As an example, the first reinforcement 221 extends rightward from the middle of the left edge of the opening 213. According to a variant, the first reinforcement 221 extends leftward from the middle of the right edge of the opening 213, or the first reinforcement 221 may extend downward from the upper edge of the opening 213, etc. It is understood that the number and position of the first reinforcement 221 may be arranged according to actual needs, which are not limitative in the present disclosure.

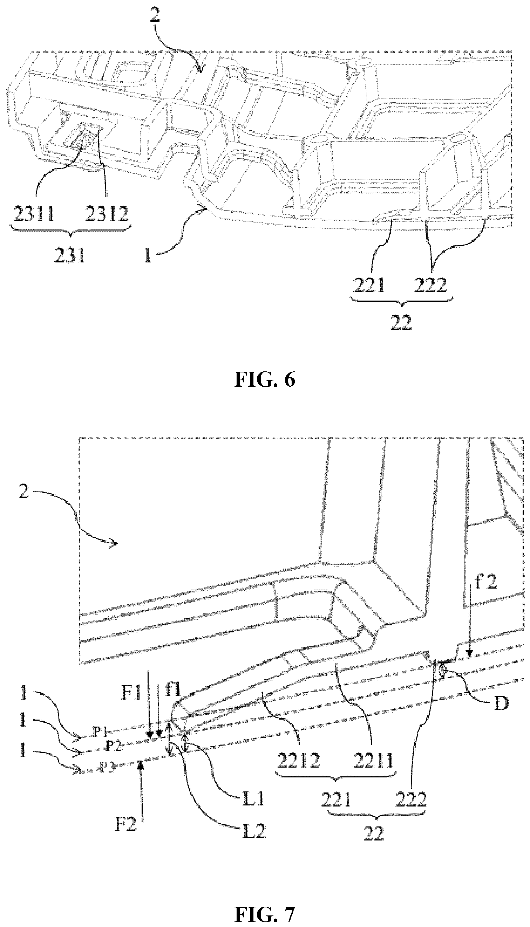

In some embodiments, the first reinforcement 221 is configured to have a strip shape extending along the length direction Y of the bumper 1. According to the embodiment shown in FIGs. 6 and 7, the first reinforcement 221 is arranged as an elastic rib having a strip shape extending along the direction Y The elastic rib comprises an extension section 2211 extending from the body 21, and a compression section 2212 extending obliquely from the extension section 2211 towards the bumper 1. For example, the compression section 2212 is inclined at an angle of 45 degrees. It is understood that the length of the extension section 2211 and the inclination angle of the compression section 2212 may be arranged according to actual needs, which are not limitative in the present disclosure. According to a variant, the first reinforcement 221 may also be arranged as an elastic sheet.

As shown in FIG. 5, the second reinforcement 222 is configured as reinforcing ribs protruding from a surface 210 of the body 21 toward the bumper 1 and staggered along the direction Y and/or the direction Z. According to some embodiments, the reinforcing ribs are arranged around the plurality of openings 213 of the first body portion 211, and the reinforcing ribs extending substantially along the direction Z intersect with the reinforcing ribs extending substantially along the direction Y According to some embodiments, a longer reinforcing rib extending substantially along the direction Z and a plurality of shorter reinforcing ribs extending substantially along the direction Y are arranged at the connection between the first body portion 211 and the second body portion 212. Each reinforcing rib extending along the direction Y is connected to the reinforcing rib extending along the direction Z. This embodiment strengthens the structural strength of the connection between the first body portion 211 and the second body portion 212 and improves the service life of the reinforcing frame 2. It is understood that the number and position of the second reinforcement 222 may be arranged according to actual needs, which are not limitative in the present disclosure.

As shown in FIGs. 3 and 4, the first body portion 211 of the reinforcing frame 2 is further provided with a positioning hole 241, and the bumper 1 is provided with a positioning member 242 mated with the positioning hole 241. The positioning member 242 protrudes from the bumper 1 and is oriented toward the reinforcing frame 2. The positioning member 242 passes through the positioning hole 241 to position the reinforcing frame 2, allowing the mounting of the reinforcing frame 2 to be more convenient and secure.

FIG. 7 shows three positional relationships of the bumper 1 relative to the reinforcing member 22 under different stress states. When the vehicle V vibrates, the bumper 1 is subjected to a force F1 along a first direction and a force F2 along a second direction opposite to the first direction, wherein the first direction is a direction away from the reinforcing frame 2, and the second direction is a direction close to the reinforcing frame. When the reinforcing member 22 is not arranged, the bumper 1 is located at the position P1. After the reinforcing member 22 is arranged, the first reinforcement 221 of the reinforcing member 22 applies a first supporting force f1 to the bumper 1 along the first direction, and the bumper 1 is deformed from the position P1 to the position P2, i.e., creating a pre-deformation of the bumper 1. At this time, the first reinforcement 221 abuts against the bumper 1, and there is a gap D between the second reinforcement 222 and the bumper 1.
1) When the bumper 1 is subjected to the force F1 along the first direction:
   The bumper 1 is deformed from the position P2 to the position P3 and produces a deformation amount L1. The deformation amount of the bumper 1 decreases as compared with the deformation amount L2 generated when the bumper 1 is deformed from the position P1 to the position P3 without the arrangement of the first reinforcement 221;
2) When the bumper 1 is subjected to the force F2 along the second direction:

First, the first reinforcement 221 applies the first supporting force f1 to the bumper 1 along the first direction. As F2 increases, the bumper 1 is deformed from the position P2 to the position P1 when the first supporting force f1 provided by the first reinforcement 221 to the bumper 1 is insufficient to resist the F2. The first reinforcement 221 is deformed at this time, and meanwhile the bumper 1 abutting against the second reinforcement 222, and the second reinforcement 222 additionally provides a second supporting force f2 to the bumper 1. In other words, the first reinforcement 221 and the second reinforcement 222 support the bumper 1 jointly.

Through the arrangement of the reinforcing member 22, it is possible to effectively reduce the vibration amplitude of the bumper 1 when the bumper 1 is subjected to external forces due to, such as road bumps, during driving of the vehicle V, to reduce the noise caused by the vibration, and to improve the driving and riding experience for the user.

The connecting member 23 comprises snap members 231 arranged substantially along the direction Z, each of the snap members 231 comprising a clip 2311 and a slot 2312 mated with the clip 2311. The clip 2311 is arranged on one of the reinforcing frame 2 and the bumper 1, and the slot 2312 is arranged on the other of the reinforcing frame 2 and the bumper 1. For example, according to the embodiment shown in FIGs. 2 and 3, two groups of snap members 231 are arranged substantially along the direction Z, the clip 2311 of each group extends from the edge of the body 21 and is bent toward the bumper 1, and the slot 2312 of each group is arranged at a position of a corresponding side edge of the bumper 1 corresponding to the clip 2311. According to a variant, it is also possible to arrange the clip on the reinforcing frame 2 and the slot at a corresponding position of the bumper 1. It is understood that the number and position of the snap members 231 may be arranged according to actual needs, which are not limitative in the present disclosure.

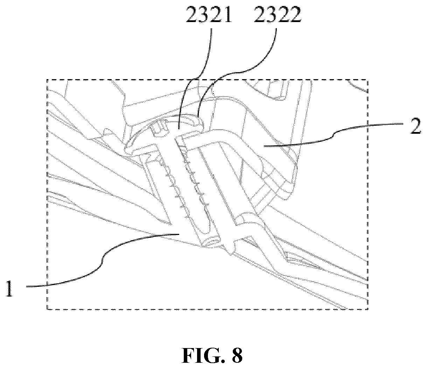

As shown in FIGs. 3, 4 and 8, the connecting member 23 further comprises a mounting hole 2321 arranged on the first body portion 211, and a fastener 2322 mated with the mounting hole 2321. The fastener 2322 passes through the mounting hole 2321 to mount the reinforcing frame 2 to the bumper 1. For example, the fastener 2322 is arranged as a screw. In addition, the reinforcing frame 2 may also be mounted to the bumper 1 by other means such as welding, which is not limitative in the present disclosure.

The technical contents and features of the present disclosure have been disclosed above. However, it is understood that those skilled in the art can make various changes and improvements to the above-disclosed conception under the creative concept of the present disclosure, and all these various changes and improvements fall within the protection scope of the present disclosure.

The description of the above embodiments is exemplary rather than limitative, and the protection scope of the present disclosure is defined by the appended claims.

## Claims

1. A bumper assembly (100), comprising
a bumper (1); and
a reinforcing frame (2) mounted to the bumper (1) through a connecting member (23);
wherein the reinforcing frame (2) comprises a reinforcing member (22) oriented towards the bumper (1), and at least part of the reinforcing member (22) provides a supporting force to the bumper (1) to limit a deformation of the bumper (1).

2. The bumper assembly (100) according to claim 1, wherein the reinforcing frame (2) is arranged adjacent to at least one end (T) of the bumper (1) in a length direction (Y) of the bumper (1).

3. The bumper assembly (100) according to claim 2, wherein the reinforcing frame (2) comprises:
a body (21) and the reinforcing member (22) extending from the body (21), wherein the reinforcing member (22) comprises:
a first reinforcement (221) abutting against the bumper (1) to provide a first supporting force; and
a second reinforcement (222), wherein a gap (D) is arranged between the second reinforcement (222) and the bumper (1);
wherein the reinforcing member (22) is configured such that, when the first supporting force provided by the first reinforcement (221) to the bumper (1) is insufficient, the bumper (1) abutting against the second reinforcement (222), and the second reinforcement (222) additionally provides a second supporting force to the bumper (1).

4. The bumper assembly (100) according to claim 3, wherein the body (21) is shaped to follow the shape of the bumper (1) and comprises:
a first body portion (211), and
a second body portion (212) bent and extending from an edge (2111) of the first body portion (211);
wherein the reinforcing member (22) is arranged on the second body portion (212).

5. The bumper assembly (100) according to claim 3, wherein the first reinforcement (221) is configured to have a strip shape extending along the length direction (Y) of the bumper (1).

6. The bumper assembly (100) according to claim 3, wherein the first reinforcement (221) comprises:
an extension section (2211) extending from the body (21); and
a compression section (2212) extending obliquely from the extension portion (2211) towards the bumper (1).

7. The bumper assembly (100) according to claim 3, wherein the second reinforcement (222) is configured as a reinforcing rib protruding from a surface (210) of the body (21).

8. The bumper assembly (100) according to claim 3, wherein the reinforcing frame (2) further comprises at least one opening (213), and the first reinforcement (221) extends from at least part of a peripheral edge (2131) of the at least one opening (213) toward the inside of the opening (213).

9. The bumper assembly (100) according to claim 1, wherein the connecting member (23) comprises:
a clip (2311) and a slot (2312) mated with the clip (2311);
wherein the clip (2311) is arranged on one of the reinforcing frame (2) and the bumper (1), and the slot (2312) is arranged on the other of the reinforcing frame (2) and the bumper (1).

10. The bumper assembly (100) according to claim 4, wherein the connecting member (23) comprises:
a mounting hole (2321) arranged on the first body portion (211) of the reinforcing frame (2); and
a fastener (2322) passing through the mounting hole (2321) to mount the reinforcing frame (2) to the bumper (1).

11. A vehicle (V) comprising the bumper assembly (100) according to any one of claims 1 to 10.
